# EUROPEAN PATENT SPECIFICATION

(11) **EP 3 626 107 B1**
(45) Date of publication and mention of the grant of the patent: **18.08.2021**
(21) Application number: 19197943.4
(22) Date of filing: 18.09.2019
(51) Int. Cl.: A45D 20/10, A45D 20/12, F24H 3/04

(54) **DRYER**
TROCKNER
APPAREIL DE SÉCHAGE

(30) Priority: 19.09.2018 US 201862733478 P; 18.01.2019 KR 20190006768
(43) Date of publication of application: 25.03.2020
(73) Proprietor: LG ELECTRONICS INC., Yeongdeungpo-Gu Seoul 07336 (KR)
(72) Inventor: YOO, Hyunsun, Seoul 08592 (KR); CHUN, Jaehung, Seoul 08592 (KR); EUN, Yousook, Seoul 08592 (KR); KIM, Joogyeom, Seoul 08592 (KR); KIM, Sungkyung, Seoul 08592 (KR); KIM, Myongsun, Seoul 08592 (KR)
(74) Representative: Vossius & Partner Patentanwälte Rechtsanwälte mbB

(56) References cited:
- DE-U1- 9 305 195
- JP-A- 2004 176 597
- KR-B1- 101 345 488

## Description

The present disclosure relates to a dryer for drying a particular object by discharging heated air. More particularly, the present disclosure relates to a dryer including a hollow casing, a fan, a motor, and a heater and configured to dry a particular object by discharging heated drying air.

A dryer for drying a human body should be designed to prevent the human body from being burn or hurt by drying air and a temperature of the drying air should be maintained at a level at which a user can feel comfortable. In addition, the dryer should be designed such that a drying operation can be completed as quickly as possible, noise caused by an air flow can be reduced, and the user is allowed to use the dryer easily and conveniently.

Thus, the dryer should be designed by taking into consideration body characteristics of a drying target, as well as a size and shape of the entire dryer, a heating temperature of drying air, an amount of air to be discharged, a discharge rate, and a size of an air outlet.

Meanwhile, if a drying target is an infant or a pet, the target may be under stress during a drying operation but not capable of talking about it. Thus, in order to perform a drying operation most suitable for body characteristics of each target, it is desirable to design a dryer capable of automatically adjusting a temperature and a discharge rate and drawing attention and interest from an infant or pet during the drying operation so that the infant or pet can enjoy the drying operation.

In particular, it is necessary to prevent heated drying air from being discharged while focused on one spot since infants have very sensitive and thin skin.

KR 10-1490979B discloses a multifunctional hair dryer, in which a rotational blade capable of converting a flow of heated air into a vortex is installed at an air outlet of the dryer, thereby extending an area to dry. However, this related art increases noise caused by operation of the rotational blade, focuses discharged air at one spot, thereby failing to quickly dry a particular body part, and excessively disperse drying air, thereby reducing drying performance.

US2006/0254073A discloses a dual-fan hair dryer which has a plurality of fan blades to thereby improve performance in introducing and discharging air, and which is capable of reducing noise and adjusting an amount of drying air to be discharged. However, this related art fails to disclose a means capable of discharging drying air in a dispersing manner or converting a direction to discharge air.

DE 9305195U discloses also a dryer.

Meanwhile, in order to extend an area to discharge drying air from a dryer, it is desirable to constantly change a direction in which air is discharged from an air outlet. Yet, the above-described conventional inventions do not provide a mechanism that converts a direction of an outlet.

Following are technical objects of the present disclosure.

First, the present disclosure is to provide a dryer including an efficient mechanism, in which an air outlet through which drying air is discharged, can be rotated by a motor.

Second, the present disclosure is to provide a dryer in which a discharging direction of drying air is converted in a predetermined pattern by the aforementioned mechanism, dispersing the drying air by a predetermined angle and thereby improving drying operation.

Third, the present disclosure is to provide a dryer in which a rotational force of the motor can be delivered accurately while a direction of the air outlet can be easily converted.

Fourth, the present disclosure is to provide a dryer in which the mechanism for converting the direction of the air outlet can be installed conveniently

In order to achieve the above object, the present disclosure provides a dryer including: a hollow casing having an open front; a fan configured to introduce air into the casing and blow the air; a heater configured to heat the air introduced into the casing; a discharge tube disposed at a downstream side of the fan to be thereby rotatable inside the casing, and having an air inlet formed at a rear and an air outlet formed at a front; a motor configured to generate power for driving the discharge tube, and having a rotation shaft; and a connector connected to the rotation shaft so as to enable the discharge tube to be rotated about a first axial line of the rotation shaft, and connected to the discharge tube so as to enable the discharge tube to be rotated about a second axial line forming a predetermined angle relative to the first axial line.

A link block may be interposed between the connector and the rotation shaft, the rotation shaft and the connector may be orthogonally connected to the link block, and at least one end of the connector may be connected to the discharge tube.

A central axial line of the rotation shaft and a vertical through hole may be formed in the link block, the connector may pass through the through hole in a fixed manner, and both ends of the connector may be connected to the discharge tube.

The both ends of the connector may be formed in a round bar, and the both ends may be rotatably inserted into a pair of recessed portions, which is formed in the discharge tube to oppose each other, with reference to the central axial line of the connector.

A pair of opposing holes may be formed in a wall of the discharge tube so that the both ends of the connector are inserted into the pair of holes to be rotatable about the central axial line of the connector.

A cylindrical inner sleeve may be disposed inside the casing, and the motor may be mounted to a motor mount that is fixed to the inner sleeve.

The motor mount may include: a motor engaging part into which a front end of the motor is inserted to be engaged therewith; and a plate-shaped bracket part fixed to the inner sleeve.

The air outlet of the discharge tube may be formed in a cross-sectional area smaller than a cross-sectional area of the air inlet, and the air outlet may be formed in an oblong shape.

The oblong shape may comprise a shape which has different sizes of orthogonal widths, such as a track-type shape and an elliptical shape.

A protrusion may be formed in the discharge tube in a radially outward direction, a cylindrical guider having a groove into which the protrusion is inserted upon rotation of the discharge tube so that the protrusion is moved may be disposed inside the casing, and the groove may form a closed curve so that the protrusion is continuously rotated along the groove.

The protrusion may include a pair of protrusion spaced apart by an angle of 180 degrees in a rotation direction of the discharge tube, the groove may form forward and backward waveforms protruding in a lengthwise direction of the discharge tube, the waveforms in portions spaced apart by a phase angle of 180 degrees may be forward and backward waveforms, which are opposite to each other, and the waveforms may be a sine wave.

A virtual straight line connecting the pair of protrusions may be orthogonal to a virtual straight line connecting the central axial line of the connector.

Other unmentioned technical solutions can be clearly understood from the following description by those having ordinary skill in the technical field to which the present disclosure pertains.

### BRIEF DESCRIPTION OF THE DRAWINGS

FIG. 1 is a perspective view of a dryer according to an embodiment of the present disclosure.
FIG. 2 is a sectional view of the dryer shown in FIG. 1.
FIGS. 3A to 3D are exploded perspective view of the dryer shown in FIG. 1.
FIG. 4 is a perspective view of a casing shown in FIG. 1, the casing which is partially cut.
FIG. 5 is a cut-away perspective view showing an internal configuration of a dryer according to an embodiment of the present disclosure.
FIG. 6 is an exploded perspective view of a discharge tube and a motor included in an embodiment of the present disclosure.
FIG. 7 is an exploded perspective view of the motor shown in FIG. 6.
FIG. 8 is a cross-sectional view of the motor shown in FIG. 7.
FIG. 9 is a development view of an interior of a cylindrical guide included in an embodiment of the present disclosure.
FIG. 10 shows a rotating step of a discharge tube included in an embodiment of the present disclosure.
FIG. 11 is a perspective view of a discharge tube and a motor according to another embodiment of the present disclosure.
FIG. 12 is a cross-sectional view of the discharge tube shown in FIG. 11.
FIG. 13 is a perspective view of a dryer installed in a stand according to an embodiment of the present disclosure.

The advantages and features of the present disclosure and a method of achieving them will become apparent with reference to the embodiments described in detail below together with the accompanying drawings. However, the present disclosure is not limited to the embodiments set forth herein but may be embodied in many different forms, and these embodiments are provided so that the disclosure of the present disclosure is complete and that those skilled in the art will fully understand the scope of the present disclosure, and the present disclosure is only defined by the scope of the claims. Like reference numerals designate like elements throughout the specification.

Hereinafter, a dryer according to an embodiment of the present disclosure will be described with accompanying drawings.

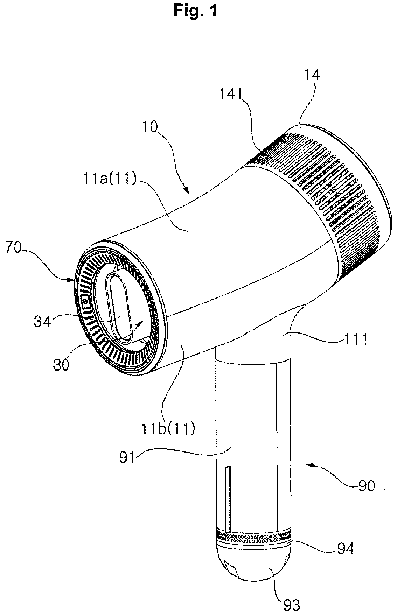

Referring to FIGS. 1, 2, and 3A, a dryer according to an embodiment of the present disclosure includes a hollow casing 10, a fan 20 for introducing external air into the casing 10 and blowing the introduced air, and a heater H installed at a downstream side of the fan 20 and heating air.

A discharge tube 30 is rotatably installed at a downstream side of the heater H. An air inlet 33 through which heated air is introduced is formed at a rear of the discharge tube 30. An air outlet 34 through which drying air is discharged to an outside is formed at a front of the discharge tube 30. A motor 40 for rotating the discharge tube 30 is installed behind the discharge tube 30.

In addition, the dryer according to an embodiment of the present disclosure may include a lighting device 70 for radiating light toward the front of the dryer, a display device 80 for displaying driving information of the dryer or allowing an input to be applied, and a grip 90 extending downwardly from the casing 10.

In addition, the dryer may include an external temperature sensor S1 for sensing a body temperature of a target object or a body part to be dried, an air temperature sensor S2 for sensing temperature of heated air in the casing 10, and a controller 98 for controlling driving of the dryer.

Hereinafter, elements of the dryer according to an embodiment of the present disclosure will be described in more detail.

Referring to FIGS. 1, 2, 3A, and 3C, the casing 10 may include a casing main body 11 having as an upper casing 11a and a lower casing 11b are integrally coupled to form a cylindrical tube, and a cylindrical cap 14 connected to a rear of the casing main body 11 and having a plurality of through holes 141 formed therein to introduce air.

According to an embodiment of the present disclosure, the casing main body 11 and the cylindrical cap 14 may be made individually and coupled integrally. However, it is also possible that the casing main body 11 and the cylindrical cap 14 can be made integrally from the beginning.

A rear cover 15 having a plurality of air introducing through holes 150 formed therein may be disposed at rear of the cylindrical cap 14. The rear cover 15 may be inserted into and coupled with an opening formed at the rear of the cylindrical cap 14 or a ring 16 having a plurality of air introducing through holes 161 formed therein may be inserted into between a periphery of the opening of the cylindrical cap 14 and a periphery of the rear cover 15, so that the cylindrical cap 14, the rear cover 15, and the ring 16 may be integrally coupled.

The meaning of "coupling" mentioned above or below may refer to a case where two elements are integrally formed or assembled by a well-known coupling technique such as fusion, adhesion, forcible insertion, screw fastening, bolt fastening, and key engagement.

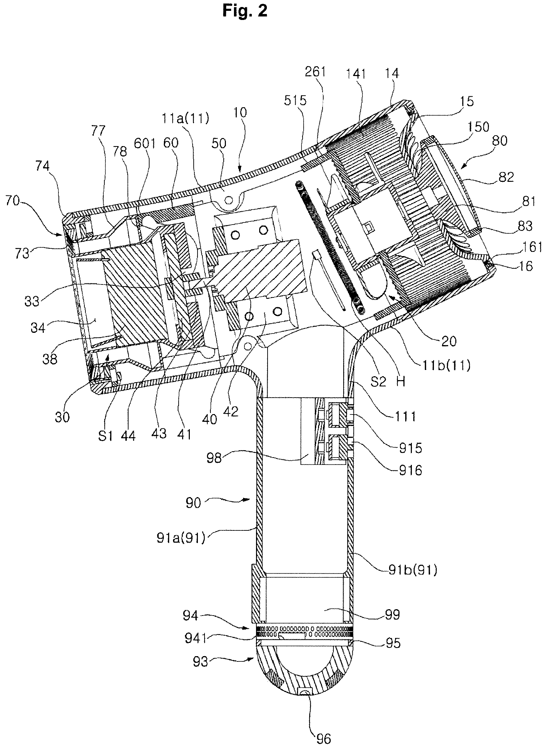

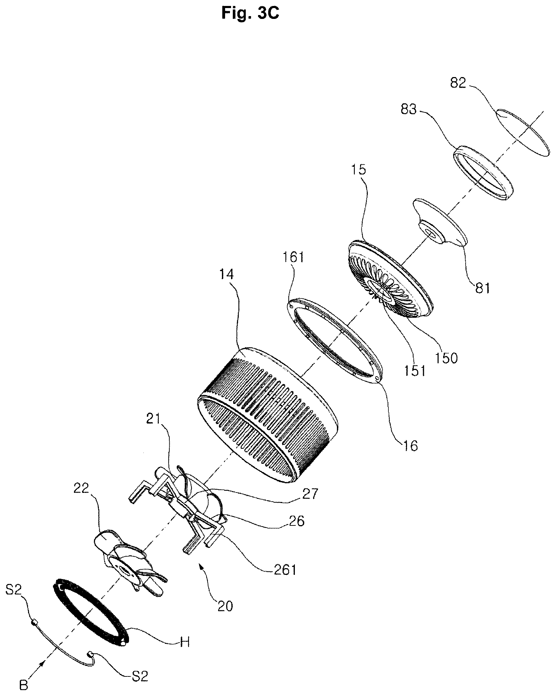

Referring to FIGS. 2 and 3C, the fan 20 may be installed inside the casing 10 and may include a first fan 21 and a second fan 22 disposed at a downstream side of the first fan 21.

A rotational shaft (not shown) of the first fan 21 and a rotation shaft (not shown) of the second fan 22 may be arranged on the same axis and accordingly the first fan 21 and the second fan 22 may be rotated on the same axis, and the rotation shafts may be arranged on the same axis separately.

In addition, as the first fan 21 is disposed inside the cylindrical cap 14, the first fan 21 may primarily perform a function of introducing external air into the casing 10 through the through hole 141 formed in the cylindrical cap 14, the air introducing through holes 150 formed in the rear cover 15, and the air introducing through holes 161 formed in the ring 16 when the first fan 21 is rotated.

As the second fan 22 is disposed at a downstream side of the first fan 21, the second fan 22 may primarily perform a function of sending external air, introduced by the first fan 21, toward the discharge tube 30 corresponding to a front side of the casing 10.

In a case where the first fan 21 and the second fan 22 are made to primarily perform functions of an air introducing fan and an air discharge fan, respectively, an amount of air to be introduced and an amount of air to be blown may increase but air blow noise may be reduced and thereby the dryer may operate quietly.

In addition, by operating only one of the first fan 21 and the second fan 22, it is possible to reduce an amount of drying air to be discharged from the dryer.

By rotating the first fan 21 and the second fan 22 so that the first fan 21 and the second fan 22 are rotated in directions opposite to each other, air may be introduced and blown more efficiently.

Meanwhile, a fan mount 27 may be installed between the first fan 21 and the second fan 22. In the fan mount 27, a plurality of rods 26 may protrude outwardly and then end portions 261 of the respective rods 26 may be bent. As the bent end portions 261 of the rods 26 may be forcibly inserted into groves 515 formed in an inner sleeve 50, which will be described later on, the fan 20 may be fixed at a predetermined location inside the casing 10.

The heater H installed at a downstream side of the fan 20 may be formed as a ring-shaped coil heater and heats air blown from the fan 20. The air temperature sensor S2 may be installed at a downstream side of the heater H. The air temperature sensor S2 may be provided as a pair of sensors on the left and right sides in front of the heater H (see FIG. 3C).

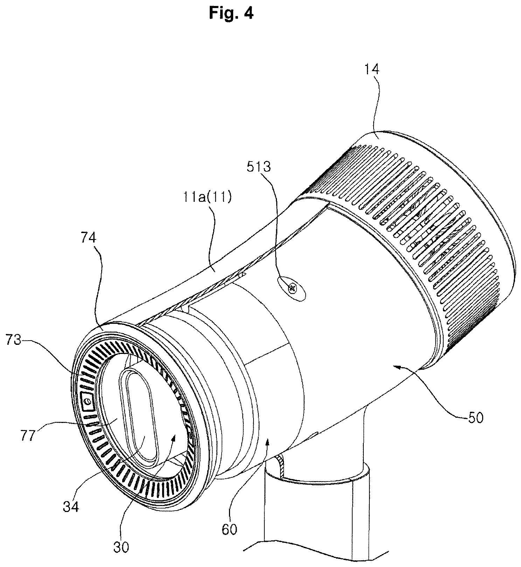

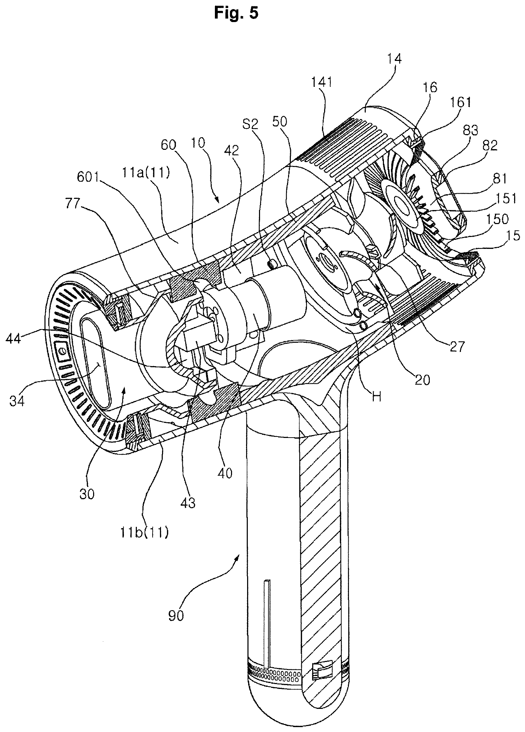

Meanwhile, referring to FIGS. 2, 3A, 4, and 5, the cylindrical inner sleeve 50 may be disposed inside the casing main body 11 composed of the upper casing 11a and the lower casing 11b. An outer circumferential surface of the inner sleeve 50 may be coupled with an inner circumferential surface of the casing main body 11 while brought into contact with the inner circumferential surface of the casing main body 11.

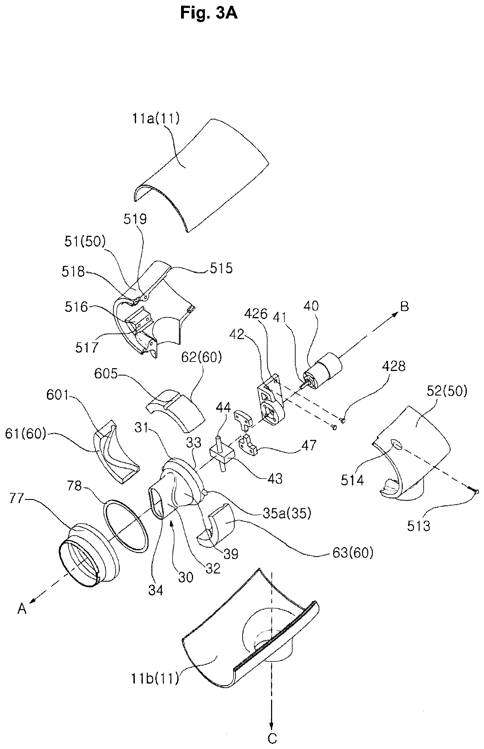

Referring to FIG. 3A, the inner sleeve 50 may be made as left and right sleeve pieces 51 and 52 which can be assembled in a manner in which a set screw 513 is fastened into a screw opening 519 formed in the left sleeve piece 51 through a groove 514 formed in the right sleeve piece 52.

In addition, referring to FIGS. 2 and 3A, the grooves 515 may be formed at a rear of the inner sleeve 50 and the end portions 261 of the rod 26 of the fan 20 may be forcibly inserted into the grooves 515, so that the fan 20 is fixed at a predetermined location inside the case 10 (see FIG. 2).

In addition, a protruding portion 516 may be formed in an inner circumferential surface of the left sleeve piece 51, and a screw groove 517 may be formed in the protruding portion 516. A set crew 428 may penetrate a motor mount 42, which will be described later on, and may be screw-coupled with the screw groove 517, so that the motor 40 described later on is fixed at a predetermined location inside the casing 11.

Referring to FIGS. 2, 3A, 5 and 6, the discharge tube 30 may be generally formed in a shape of which a front side is small and a rear side is funnel-shaped. The rear part of the discharge tube 30 may be formed as a cylindrical part 31, and the front part of the discharge tube 30 may be formed as a predetermined pipe portion 32 and a flared portion 39 in which a sectional area is gradually reduced toward the front of the discharge tube 30 may be formed between the front and the rear of the discharge tube 30.

The air inlet 33 in a circular shape may be formed inside the cylindrical portion 31 of the discharge tube 30. The pipe portion 32 may be formed in an oblong pillar shape, and the air outlet 34 in an oblong shape may be formed at a front side of the discharge tube 30.

The meaning of "oblong" mentioned above is not just a rectangle, but also a shape which has different sizes of orthogonal widths, such as a track-type shape and an elliptical shape.

In addition, although the air inlet 33 formed in the discharge tube 30 is in a circular shape and the air outlet 34 is in an oblong shape according to the present disclosure, aspects of the present disclosure are not limited thereto and the air inlet 33 and the air outlet 34 maybe modified into various shapes.

Meanwhile, as the air outlet 34 formed in the discharge tube 30 does not have a big size and is smaller in size than the air inlet 33, air may be concentrated from the air outlet 34 and discharged to the outside.

A partition 38 may be disposed to partition an air passage formed inside the discharge tube 30, so that air is discharged dispersedly.

In addition, although not shown in the drawings, the air outlet 34 may be formed in a circular shape and may be asymmetrical with respect to a central rotation line (not shown) of the discharge tube 30 or may be eccentric to the central rotation shaft.

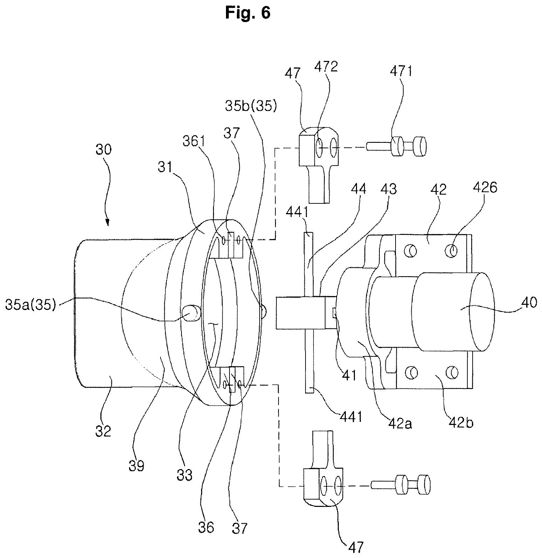

Referring to FIG. 6, a pair of protrusions 35 may be formed in the cylindrical part 31 of the discharge tube 30 to protrude outwardly at 180 degrees. The pair of protrusions 35 may be slidably inserted into a groove 601 of a cylindrical guider 60 described later on.

Referring to FIGS. 2 to 5, the cylindrical guide 60 may be disposed in front of the inner sleeve 50. Referring to FIG. 3A, three pieces 61, 62, and 63 may be coupled to each other to form a cylindrical shape.

As the groove 601 is formed in an inner surface of the cylindrical guider 60, the protrusions 35 of the discharge tube 30 may be inserted into the groove 601 in a sliding manner. Meanwhile, the groove 601 may form a closed curve so that the protrusions 35 are rotated while the discharge tube 30 is rotated.

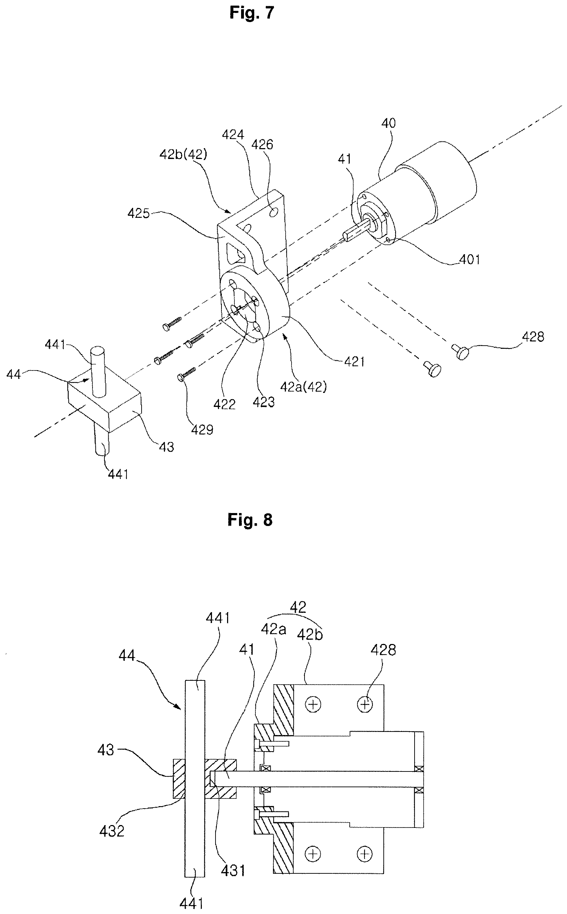

The groove 601 may be formed to form a waveform when an inner circumferential surface of the guider 60 is flattened as in FIG. 8. The waveform may be a sine wave.

Meanwhile, the cylindrical guider 60 may be disposed in front of the inner sleeve 50 and coupled to the inner sleeve 50, or may be pressed inwardly along with the inner sleeve 50 by an inner circumferential surface of the casing main body 11 and thereby fixed to the inside of the casing 10.

The casing main body, the inner sleeve, and the guider may be manufactured individually and coupled to each other integrally, as shown in the embodiment of the present disclosure. However, the casing main body, the inner sleeve, and the guider may be manufactured integrally or two of the casing main body, the inner sleeve, and the guider may be manufactured integrally and coupled to the remaining one of them.

In FIG. 3A, reference numerals 518 and 605 respectively indicate a cut-off portion 518 formed in the inner sleeve 50 and a groove 605 formed in the guider 60, by which a cable (not shown) is allowed to pass through.

Meanwhile, a pair of inwardly protruding blocks 36 may protrude inwardly of the cylindrical part 31 of the discharge tube 30 to oppose each other, and a recessed portion 37 may be formed in each of the inwardly protruding blocks 36.

The pair of recessed portions 37 may be arranged at 180 degrees to oppose each other, and the pair of protrusions 35 and the pair of recessed portions 37 may be arranged so that virtual straight line connecting the pair of recessed portions 37 can be orthogonal to a virtual straight line connecting the pair of protrusions 35. A connector 44 of a motor described below may be inserted into the recessed portions 37.

Referring to FIG. 2, 3A and 5 to 8, the motor 40 rotating the discharge tube 30 may be fixed to the motor mount 42, and the motor mount 42 may be fixed to a left sleeve piece 51 in the left and right sleeve pieces 51 and 52 of the aforementioned inner sleeve 50.

The motor mount 42 may include a motor engaging part 42a, and a bracket part 42b integrally formed with the motor engaging part 42a to be thereby fastened with the aforementioned inner sleeve 50.

The motor engaging part 42a may formed as a cylindrical pipe portion 421 into which at least a front end of the motor 40 is inserted. As a bolt 429 is screw-engaged with a screw opening 401 formed at a front of the motor 40 through a hole 423 formed in the pipe portion 421, the motor 40 is engaged with the motor engaging part 42a. A rotation shaft 41 of the motor 40 protrudes forward through a hollow portion 422 formed in the motor engaging part 42a.

The bracket part 42b includes a connecting portion 425 protruding outwardly from the motor engaging part 42a, and a plate body portion 424 bent rearwardly from one side of the connecting portion 425.

Meanwhile, as a set screw 428 is screw-engaged with a screw opening 517, formed in a protrusion 516 of the left sleeve piece 51, through a through hole 426 formed in the plate body portion 424, the bracket part 42b may be affixed to the inner sleeve 50 and therefore the motor 40 may be fixed at a predetermined location in the inner sleeve 50.

A power transfer device for transferring a rotational force of the motor 40 to the discharge tube 30 may include a rectangular link block 43 connected to the rotation shaft 41 of the motor 40 to be fixed thereto, and a round bar-shaped connector 44 disposed orthogonally to the rotation shaft 41 and penetrating the link block 43 so that both ends 441 protrude outwardly of the link block 43.

The rotation shaft 41 is inserted into a horizontal opening 431 formed in one side of the link block 43 to be thereby fixed thereto, and the connector 44 penetrates the through hole 432 that is vertically formed in the link block 43.

The connector 44 may be connected to the link block 43 in a rotatable manner or may be connected to the link block 43 in a fixed manner.

The both ends 441 of the connector 44 may be inserted into the recessed portion 37 of the discharge tube 30 so that the discharge tube 30 is rotated in a rotation direction of the rotation shaft 41 when the motor 40 is driven.

The both ends 441 of the connector 44 may be inserted into the recessed portion 37 in a rotatable manner or in a fixed manner. In a case where the connector 44 is fixed to the link block 43, at least the both ends 441 of the connector 44 may be inserted into the recessed portion 37 in a rotatable manner and accordingly the connector 44 and the discharge tub 30 may be connected to each other to be thereby rotated relative to each other with reference to a central axial line of the connector 44.

After the both ends 441 of the connector 44 is inserted into the recessed portion 37 of the discharge tube 30, a stopper 47 may be engaged with an inwardly protruding block 36 of the discharge tube 30. More specifically, as the bolt 471 is screw-engaged with a screw opening 361 formed in the inwardly protruding block 36 through a hole 472 formed in the stopper 47, the stopper 47 may be engaged with the discharge tube 30.

As the discharge tube 30 and the motor 40 are connected as above, the connector 44 may be rotated upon rotation of the motor 40 and the discharge tube 30 may rotate upon the rotation of the connector 44. At this point, a pair of protrusions 35 protruding outwardly from the cylindrical part 31 of the discharge tube 30 is inserted into a groove 601 formed in an inner circumferential surface of the cylindrical guider 60 to thereby slide along the groove 601. Thus, the discharge tube 30 may rotate in a rotation direction of the rotation shaft 41 along with the connector 44, while rotating forward and backward at a predetermined angle with respect to the central axial line of the connector 44.

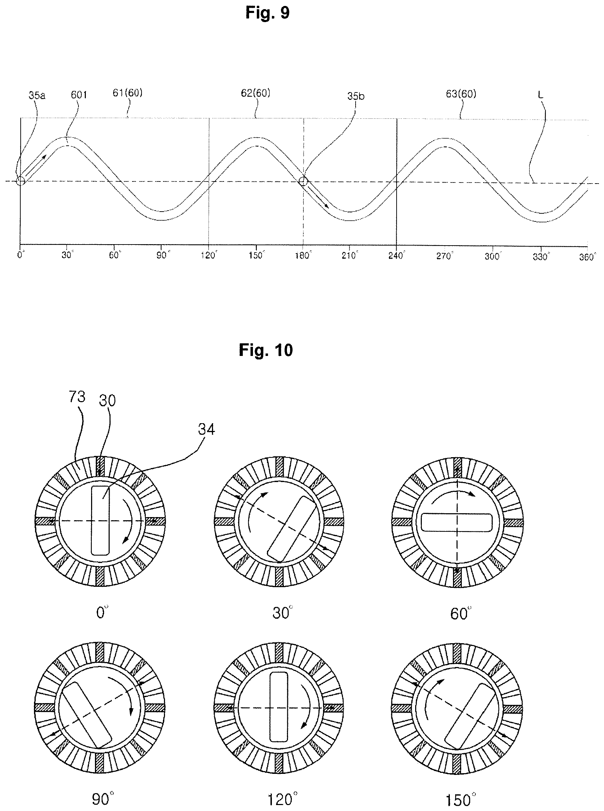

Referring to FIGS. 9 and 10, a further detailed description will be provided.

FIG. 9 is a view showing a flattened inner surface of the cylindrical guider 60. Reference numeral 61, 62, and 63 indicates a first piece, a second piece, and a third piece of the cylindrical guider 60. Reference numeral 601 indicates a groove formed in the inner surface of the cylindrical guider 60. Reference numerals 35a and 35b indicate a pair of protrusions formed in the discharge tube 30. An angle indicates a phase angle in a range of 360 degrees from 0 degree. In addition, a period of a waveform formed by the groove 601 shown in FIG. 9 is 120 degrees, the waveform is symmetrical in a forward direction and a backward direction with reference to a reference line L in two parts having a phase angle of 180 degrees.

When the motor 40 is driven, the discharge tube 30 is rotated and the pair of protrusions 35a and 35b in the discharge tube 30 moves along the groove 601 as well. When the pair of protrusions 35a and 35b are at positions of 0° and 180° relative to the groove 601, the protrusions are placed at the reference line L at the same height, and thus, the air outlet 34 of the discharge tube 30 may be positioned at the center in a vertical direction, for example, at 0° as shown in FIG. 9. At such positions, the pair of protrusion 35a and 35b move in an arrow direction as the discharge tube 30 is rotated in a rotation direction of the rotation shaft 41. Thus, when the height of the pair of the protrusions 35a and 35b are tilted toward the opposite sides from the reference line L and rotated by 30 degrees, the pair of protrusions 35a and 35b may be positioned farthest from the reference line L to oppose each other. Then, when the pair of the protrusions 35a and 35b are rotated by 60° from the above positions, the pair of the protrusions 35a and 35b may be positioned on the reference line L again. Then, when the pair of the protrusions 35a and 35b are rotated further by 90 degrees, the pair of protrusions 35a and 35b are tilted farthest from the reference line. Then, when the pair of the protrusions 35a and 35b are further rotated by 120 degrees, the pair of the protrusions 35a and 35b may be positioned on the reference line L. Then, the above-described movement is performed repeatedly.

Thus, when the rotation shaft 41 is rotated, the discharge tube 30 is rotated in the rotation direction of the rotation shaft 41 by a predetermined angle relative to a central axial line of the connector 44. Accordingly, while the air outlet 34 of the discharge tube 30 is rotated, a position of the air outlet 34 of the discharge tube 30 may be changed toward one side from a center of the rotation and then the position may be changed toward the other side again (see FIG. 10). Therefore, drying air to be discharged from the air outlet 34 may be dispersed to a wider area upon change of a discharge angle and an area to dry may be extended widely.

Meanwhile, in a case where the discharge tube 30 is not rotated as the motor 40 is stopped, a direction of air being discharged from the air outlet 34 does not change. Since the air outlet 34 of the discharge tube 30 is formed in size smaller than the air inlet 33, drying air may be discharged concentratedly only through the air outlet 34. When the motor 40 is driven, the discharge tube 30 is rotated and accordingly drying air discharged from the air outlet 34 upon the rotation of the discharge tube 30 may be dispersed. That is, as driving of the motor 40 is controlled, air may be discharged concentratedly or dispersedly toward a drying target, when necessary.

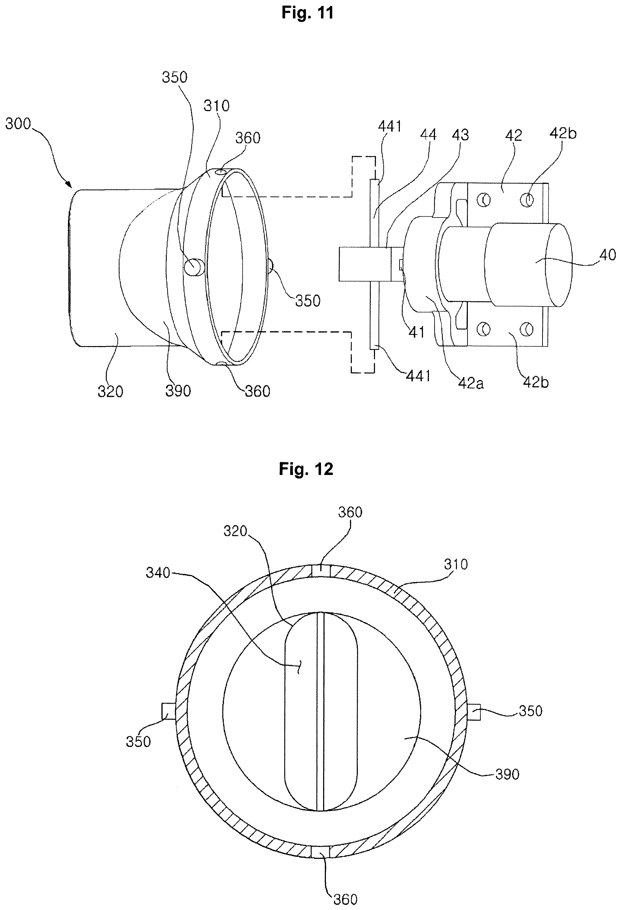

A coupling configuration between a discharge tube and a motor according to another embodiment of the present disclosure is shown in FIGS. 11 and 12.

A discharge tube 300 shown in FIG. 11 may include a cylindrical part 310 at a rear of the discharge tube 300 as does the above-described embodiment, an oblong body part 320 at a front of the discharge tube 300, and a funnel-shaped flared part 390 formed between the front and the rear of the discharge tube 300. A circular air inlet and an oblong air outlet may be formed in the discharge tube 300.

A pair of holes 360 opposing each other may be formed in the cylindrical part 310, and both ends 441 of a connector may be inserted into the hole 360 in a rotatable manner.

According to another embodiment of the present disclosure, an example in which the pair of the holes 360 is formed to penetrate the cylindrical part 310 is described. At least one of the holes 360 may not penetrate the cylindrical part 310 and may be formed as a groove recessed outwardly from an inner surface of the cylindrical part 310.

The motor 40 may include the rotation shaft 41 as shown in the above-described embodiment, and may be engaged with the motor mount 42 that is mounted to the inner sleeve 50.

Meanwhile, even in another embodiment of the present disclosure shown in FIGS. 11 and 12, at least one protrusion 35 may be formed in the discharge tube 300 and thus inserted into a groove 601 in a movable manner.

Meanwhile, referring to FIGS. 2, 3A, 4, and 5, a discharge cover 77 may be formed in a cylindrical shape so as to accommodate in the discharge tube 30 between the front of the casing main body 11 and the discharge tube 30 and may be disposed in a fixed manner. The front of the discharge tube 30 may be positioned in an inner side of the discharge cover 77.

A rear end of the discharge cover 77 may be coupled to a front end of the aforementioned cylindrical guider 60, and a front end of the discharge cover 77 may extend forward to a front end of the casing main body 11.

As a ring-shaped sealing 78 is interposed between the rear end of the discharge cover 77 and the discharge tube 30, air blown from the fan 20 that may leak through between the discharge cover 77 and the discharge tube 30 is prevented from leaking to the outside.

An outer circumferential surface of the sealing 78 may be fixed to the discharge cover 77 in a fixed manner, and an inner circumferential surface of the sealing 78 may be disposed in a not fixed manner so that the discharge tube 30 can be rotated without interference with the sealing 78.

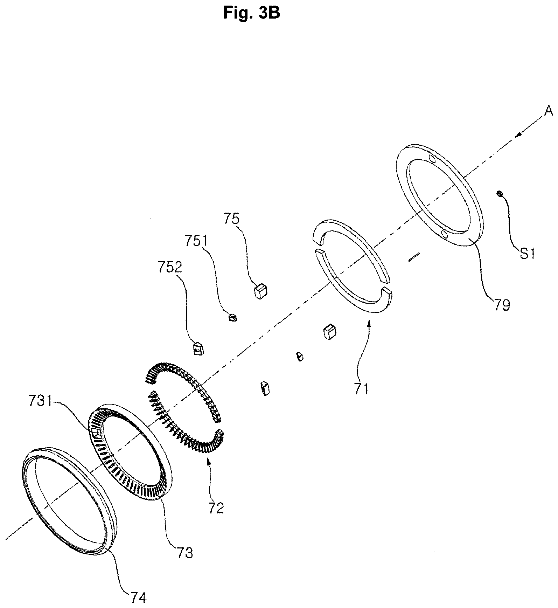

Referring to FIGS. 2 and 3B, a fixing ring 79 may be protrusion-inserted into the discharge cover 77, and thus, the fixing ring 79 may be interposed between the discharge cover 77 and the casing main body 11.

The external temperature sensor S1 may be installed behind the fixing ring 79. The external temperature sensor S1 may sense a temperature of a drying target that is hit by drying air discharged from the air outlet 34 of the discharge tube 30.

The lighting device 70 may be disposed in front of the fixed ring 79. The lighting device 70 may include a light emitting panel 71, a light diffusing module 72, a light guide 73, and a front cap 74.

The light emitting panel 71 may be a light emitting diode (LED) panel in which at least one LED module (not shown) is disposed. Two semi-arc-shaped panel pieces may be disposed to form one ring-type panel 71. The light emitting panel 71 may be coupled to the fixing ring 79.

The light diffusing module 72 may be disposed in front of the light emitting panel 71. The light diffusing module 72 may be formed as a light guide sheet that can radiate light by dispersing light emitted from the light emitting panel 71. Similarly to the light emitting panel 71, two semi-arc-shaped module pieces may be disposed to form one ring-type module.

A ring-type light guide 73 may be disposed in front of the light diffusing module 72, so that light having passed through the light diffusing module 72 is guided by the light guide 73 in a forward direction and thereby radiated in a dispersedly manner.

Meanwhile, the front cap 74 may be inserted to a front opening of the casing main body 11to thereby cover the front opening. The light emitting panel 71, the light diffusing module 72, the light guide 73 may be interposed between the front cap 74 and the discharge cover 77.

Meanwhile, a pair of ionizers 75 may be disposed at the light emitting panel 71 and/or light diffusing module 72. An ionizer cover 752 having a nozzle 751 inserted therein may be inserted into an opening 731 formed in the light guide 73, so that negative ions discharged from the ionizers 75 are discharged from the front of the dryer.

Accordingly, when drying air is discharged to a drying target object, plasma is discharged and thus positive and negative ions are generated. Therefore, hazardous matters such as various bacteria contained in the air may be removed, dust or the like in the air may be neutralized and coarsened to thereby prevent foreign substances such as dust or the like from being attached to the drying target object, and skin and hair of the target object may be kept moisturized.

Meanwhile, referring to FIGS. 2, 3C and 5, the display device 80 installed at the front of the dryer may include a fixing base 81 having one end inserted into and coupled to an opening 151 formed at a center of the aforementioned rear cover 15, a display panel 82 disposed at a rear of the fixing base 81 to display various kinds of information, and a deco ring 83 for coupling the fixing base 81 and the display panel 82.

The display panel 82 may be formed as a touch panel and may display various driving factors, which is directly input by a user, such as a heating temperature of drying air, a discharge rate, a drying duration, etc. In addition, the display panel 82 may receive information necessary for driving from an external input device, such as heating temperature appropriate for a drying target object, a drying duration, etc., and may display the received information.

Accordingly, a user may perform a drying operation while easily recognizing current driving information displayed on the display panel 82, and may receive operation information such as an optimal temperature for drying air, an amount of wind, a wind speed, a drying duration, etc. according to a drying target object and perform a different optimal operation according to each drying target object.

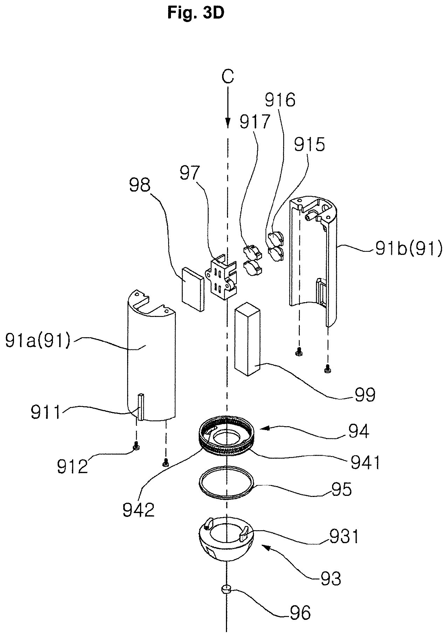

Meanwhile, referring to FIG. 2 and 3D, the grip 90 coupled to a lower side of the casing 10 may be formed as semi-arc-shaped left and right grip pieces 91a and 91b. The grip 90 may include a grip main body 91 and a lower cover 93 coupled to the lower side of the grip main body 91.

The grip pieces 91a and 91b may be coupled to a lower extension portion 111, which protrudes from the lower side of the casing main body 11, by a set screw 912. The lower cover 93 may be assembled with the grip main body 91 by an insertion protrusion 931 that protrudes upwardly from an upper surface of the lower cover 93.

Meanwhile, a heat dissipating cap 94 having a dissipation through hole 941 punched therein may be interposed between the grip main body 91 and the lower cover 93.

An upper surface of the heat dissipating cap 94 may be welded with a lower side of the grip main body 91. The insertion protrusion 931 of the lower cover 93 may be forcibly inserted into a hole 942 and thereby coupled to the heat dissipating cap 94.

A ring-shaped first electrical terminal 95 may be interposed between the heat dissipating cap 94 and the lower cover 93. The second electrical terminal 96 may be disposed at the center of the bottom of the lower cover 93. The first electrical terminal 95 and the second electrical terminal 96 may be electrically connected to an external power (not shown).

Meanwhile, two touch buttons 915 and 916 may be vertically installed in the right grip piece 91b. A button case 917 and a button housing 97 may be mounted in front of the two touch buttons 915 and 916.

One of the touch buttons 915 and 916 is an ON/OFF switch of the dryer, and the other one may be an ON/OFF switch of the motor 40.

In addition, the controller 98 may be disposed inside the grip main body 91. A battery 99 may be detachably installed in a lower side space of the grip main body 91. The battery 99 may be charged by receiving power from the first electrical terminal 95 and the second electrical terminal 96.

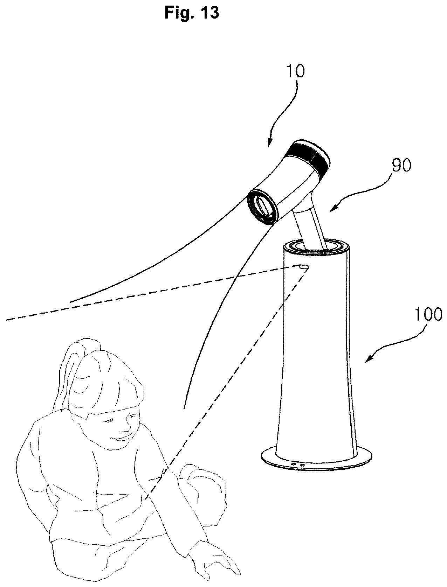

Meanwhile, referring to FIG. 13, the grip 90 is held in a stand 100, and therefore, the dryer can be driven even in a state in which a user is not gripping the dryer. The dryer may be adjusted in height and angle suitable for a size of a drying target object and then discharge drying air.

According to the dryer of the present disclosure, there are one or more effects as below.

First, the dryer according to an embodiment of the present disclosure is formed such that the rotation shaft of the motor and the discharge tube are connected to each other via a connector so that the discharge tube for discharging drying air to the outside can be rotated on an axial line forming a predetermined angle relative to the rotation axis while rotated in the rotation direction of the rotation shaft of the motor, and therefore, a mechanism the direction can be changed while the discharge tube is rotated may be realized.

Second, the present disclosure is configured such that the link block having the through hole formed therein is fixed to one end of the rotation shaft and the connector passes through the through hole so as to be orthogonal to the rotation shaft., so that the discharge tube can be connected to both ends of the connector to be rotatable about an axial line of the connector and thereby an efficient mechanism for biaxial rotation of the discharge tube can be realized.

Third, the present disclosure is configured such that at least a part of the motor for generating power to rotate the discharge tube is inserted into the motor engaging part of the motor mount so that the motor can be engaged with the motor engaging part, and the bracket part is formed to extend from an outer side of the motor engaging part so that the bracket part is affixed to the inner sleeve disposed inside the casing and thereby the motor can be easily fixed at a predetermined location inside the casing.

Fourth, the dryer according to the present disclosure is configured such that a pair of protrusions formed in the discharge tube is rotated upon rotation of the discharge tube while being guided along a closed-curve and waveform-shaped groove formed in the guider, and the both ends of the connector, being connected orthogonally to the rotation shaft of the motor, is inserted into a pair of recessed portions or a pair of holes formed in the discharge tube, and therefore, the discharge tube can be rotated in the rotation direction of the rotation shaft and at the same time rotated by a predetermined angle relative to the axial line of the connector in forward and backward directions and this leads the air outlet of the discharge tube to move from one side to the other side and from the other side to one side continuously. Accordingly, since a direction of drying air to be discharged from the air outlet keeps changing, the drying air discharged to a drying target body part can be widely dispersed and thereby the drying target body part can be dried effectively.

## Claims

1. A dryer, comprising:
a hollow casing (10) having an open front;
a fan (20) configured to introduce air into the casing and blow the air;
a heater (H) configured to heat the air introduced into the casing;
a discharge tube (30) disposed at a downstream side of the fan, being rotatable inside the casing (10), and having an air inlet formed at a rear thereof and an air outlet formed at a front thereof;
a motor (40) configured to generate power for driving the discharge tube (30), and having a rotation shaft (41); and
a connector (44) connected to the rotation shaft (41) of the motor (40) so as to enable the discharge tube (30) to be rotated about a first axial line of the rotation shaft (41), **characterized in that** the connector (44) is connected to the discharge tube (30) so as to enable the discharge tube (30) to be rotated about a second axial line forming a predetermined angle relative to the first axial line.

2. The dryer of claim 1, wherein the connector (44) is disposed in a direction orthogonal to the rotation shaft (41) and at least one end of the connector (44) is connected to the discharge tube (30).

3. The dryer of claim 2, further comprising a link block (43) disposed between the connector (44) and the rotation shaft (41).

4. The dryer of claim 3, wherein the link block (43) comprises a horizontal opening (431) horizontally formed therein so that the rotation shaft (41) is inserted into and fixed to the horizontal opening (431), and a through hole (432) vertically formed in the link block (43) so that the connector (44) is fixed to the through hole (432).

5. The dryer of any one of claims 1 to 4, wherein the connector (44) comprises both ends (441) disposed to oppose each other and connected to the discharge tube (30).

6. The dryer of claim 5, wherein the discharge tube (30) comprises a pair of recessed portions (37) opposing each other so that the both ends (441) of the connector (44) are inserted into the recessed portions (37) to be rotatable about a central axial line of the connector (44) crossing with the first axial line of the rotation shaft (41).

7. The dryer of claim 6, wherein the discharge tube (30) has a pair of inwardly protruding blocks protruding inwardly to oppose each other, and the pair of recessed portions (37) is formed in the pair of the inwardly protruding blocks (36).

8. The dryer of claim 5, wherein the discharge tube (30) comprises a pair of holes (360) opposing each other so that the both ends (441) of the connector (44) are rotatably inserted into the pair of the holes (360).

9. The dryer of any one of claims 1 to 8, wherein the discharge tube (30) comprises a protrusion (35) formed in a radially outward direction, and the casing (10) comprises a groove (601) formed thereinside so that the protrusion (35) is capable of moving along the groove (601).

10. The dryer of claim 9, wherein the groove (601) is formed in a cylindrical guider (60) disposed inside the casing (10).

11. The dryer of claim 9 or 10, wherein the groove (601) forms a closed curve so that the protrusion (35) is rotated along the groove (601) when the discharge tube (30) is rotated.

12. The dryer of claim 11, wherein the groove (601) is formed in a wave form, and preferably the wave form is a sine wave form.

13. The dryer of any one of claims 9 to 12, wherein the protrusion (35) comprises a pair of protrusions (35a, 35b) that are spaced apart from each other by 180 degrees in a rotation direction of the discharge tube (30).

14. The dryer of claim 13, insofar as depending on claim 12, wherein the wave form formed by the groove (601) is symmetric in forward and backward directions with reference to a central reference line of the groove (601), or the wave form has a periodic angle of 180 degrees.

15. The dryer of claim 13, wherein a virtual straight line connecting the pair of protrusions (35a, 35b) and the central axial line of the connector (44) are orthogonal to each other.

## Patentansprüche

1. Trockner mit:
einem hohlen Gehäuse (10) mit einer offenen Vorderseite;
einem Gebläse (20), das konfiguriert ist, Luft in das Gehäuse einzuleiten und die Luft zu blasen;
einer Heizung (H), die konfiguriert ist, die in das Gehäuse eingeleitete Luft zu erwärmen;
einem Ausstoßrohr (30), das auf einer Stromabwärtsseite des Gebläses angeordnet ist, das innerhalb des Gehäuses (10) drehbar ist und einen Lufteinlass, der an dessen Rückseite ausgebildet ist, und einen Luftauslass aufweist, der an dessen Vorderseite ausgebildet ist;
einem Motor (40), der konfiguriert ist, Energie zum Antreiben des Ausstoßrohrs (30) zu erzeugen, und eine Drehwelle (41) aufweist; und
einem Verbinder (44), der mit der Drehwelle (41) des Motors (40) verbunden ist, um zu ermöglichen, dass das Ausstoßrohr (30) um eine erste Axiallinie der Drehwelle (41) gedreht wird, **dadurch gekennzeichnet, dass** der Verbinder (44) mit dem Ausstoßrohr (30) verbunden ist, um zu ermöglichen, dass das Ausstoßrohr (30) um eine zweite Axiallinie gedreht wird, die einen vorgegebenen Winkel relativ zur ersten Axiallinie bildet.

2. Trockner nach Anspruch 1, wobei der Verbinder (44) in einer Richtung orthogonal zur Drehwelle (41) angeordnet ist und mindestens ein Ende des Verbinders (44) mit dem Ausstoßrohr (30) verbunden ist.

3. Trockner nach Anspruch 2, der ferner einen Verbindungsblock (43) aufweist, der zwischen dem Verbinder (44) und der Drehwelle (41) angeordnet ist.

4. Trockner nach Anspruch 3, wobei der Verbindungsblock (43) eine darin horizontal ausgebildete horizontale Öffnung (431), so dass die Drehwelle (41) in die horizontale Öffnung (431) eingesetzt und an dieser befestigt ist, und ein im Verbindungsblock (43) vertikal ausgebildetes Durchgangsloch (432) aufweist, so dass der Verbinder (44) am Durchgangsloch (432) befestigt ist.

5. Trockner nach einem der Ansprüche 1 bis 4, wobei beide Enden (441) des Verbinders (44) einander gegenüberliegend angeordnet sind und mit dem Ausstoßrohr (30) verbunden sind.

6. Trockner nach Anspruch 5, wobei das Ausstoßrohr (30) ein Paar vertiefter Abschnitte (37) aufweist, die einander gegenüberliegen, so dass die beiden Enden (441) des Verbinders (44) in die vertieften Abschnitte (37) eingesetzt sind, so dass sie um eine zentrale Axiallinie des Verbinders (44) drehbar sind, die sich mit der ersten Axiallinie der Drehwelle (41) kreuzt.

7. Trockner nach Anspruch 6, wobei das Ausstoßrohr (30) ein Paar nach innen vorstehender Blöcke aufweist, die so nach innen vorstehen, dass sie einander gegenüberliegen, und das Paar der vertieften Abschnitte (37) im Paar der nach innen vorstehenden Blöcke (36) ausgebildet ist.

8. Trockner nach Anspruch 5, wobei das Ausstoßrohr (30) ein Paar Löcher (360) aufweist, die einander gegenüberliegen, so dass die beiden Enden (441) des Verbinders (44) drehbar in das Paar der Löcher (360) eingesetzt sind.

9. Trockner nach einem der Ansprüche 1 bis 8, wobei das Ausstoßrohr (30) einen Vorsprung (35) aufweist, der in einer radialen Auswärtsrichtung ausgebildet ist, und das Gehäuse (10) eine Nut (601) aufweist, die darin ausgebildet ist, so dass sich der Vorsprung (35) längs der Nut (601) bewegen kann.

10. Trockner nach Anspruch 9, wobei die Nut (601) in einer zylindrischen Führung (60) ausgebildet ist, die innerhalb des Gehäuses (10) angeordnet ist.

11. Trockner nach Anspruch 9 oder 10, wobei die Nut (601) eine geschlossene Kurve bildet, so dass der Vorsprung (35) längs der Nut (601) gedreht wird, wenn das Ausstoßrohr (30) gedreht wird.

12. Trockner nach Anspruch 11, wobei die Nut (601) in einer Wellenform ausgebildet ist und die Wellenform vorzugsweise ein Sinuswellenform ist.

13. Trockner nach einem der Ansprüche 9 bis 12, wobei der Vorsprung (35) ein Paar Vorsprünge (35a, 35b) aufweist, die in einer Drehrichtung des Ausstoßrohrs (30) voneinander um 180 Grad beabstandet sind.

14. Trockner nach Anspruch 13, insoweit wie von Anspruch 12 abhängig, wobei die durch die Nut (601) gebildete Wellenform in Vorwärts- und Rückwärtsrichtung in Bezug auf eine Mittelreferenzlinie der Nut (601) symmetrisch ist, oder die Wellenform einen Periodenwinkel von 180 Grad aufweist.

15. Trockner nach Anspruch 13, wobei eine virtuelle gerade Linie, die das Paar der Vorsprünge (35a, 35b) verbindet, und die mittlere Axiallinie des Verbinders (44) orthogonal zueinander sind.

## Revendications

1. Séchoir, comprenant :
un boîtier creux (10) avec une face avant ouverte ;
un ventilateur (20) prévu pour introduire de l'air dans le boîtier et souffler de l'air ;
un élément chauffant (H) prévu pour chauffer l'air introduit dans le boîtier ;
un conduit de refoulement (30) disposé en aval du ventilateur, rotatif à l'intérieur du boîtier (10), et présentant une entrée d'air formée à l'arrière et une sortie d'air formée à l'avant ;
un moteur (40) prévu pour générer une puissance d'entraînement du conduit de refoulement (30), et pourvu d'un arbre rotatif (41) ; et
un connecteur (44) raccordé à l'arbre rotatif (41) du moteur (40) de manière à permettre la rotation du conduit de refoulement (30) autour d'une première ligne axiale de l'arbre rotatif (41), **caractérisé en ce que** le connecteur (44) est raccordé au conduit de refoulement (30) de manière à permettre au conduit de refoulement (30) d'être entraîné en rotation autour d'une deuxième ligne axiale formant un angle défini avec la première ligne axiale.

2. Séchoir selon la revendication 1, où le connecteur (44) est disposé dans une direction orthogonale à l'arbre rotatif (41), et au moins une extrémité du connecteur (44) est raccordée au conduit de refoulement (30).

3. Séchoir selon la revendication 2, comprenant en outre un bloc de liaison (43) disposé entre le connecteur (44) et l'arbre rotatif (41).

4. Séchoir selon la revendication 3, où le bloc de liaison (43) comprend une ouverture horizontale (431) qui y est ménagée horizontalement, de sorte que l'arbre rotatif (41) y est inséré et fixé sur l'ouverture horizontale (431), et un trou traversant (432) ménagé verticalement dans le bloc de liaison (43), de sorte que le connecteur (44) est fixé sur le trou traversant (432).

5. Séchoir selon l'une des revendications 1 à 4, où le connecteur (44) présente deux extrémités (441) disposées en opposition l'une à l'autre et raccordées au conduit de refoulement (30).

6. Séchoir selon la revendication 5, où le conduit de refoulement (30) comprend une paire de parties évidées (37) opposées l'une à l'autre, de sorte que les deux extrémités (441) du connecteur (44) sont insérées dans les parties évidées (37) pour être rotatives autour d'une ligne axiale centrale du connecteur (44) croisant la première ligne axiale de l'arbre rotatif (41).

7. Séchoir selon la revendication 6, où le conduit de refoulement (30) comprend une paire de blocs en saillie vers l'intérieur de manière à être opposés l'un à l'autre, et où la paire de parties évidées (37) est formée dans la paire de blocs en saillie vers l'intérieur (36).

8. Séchoir selon la revendication 5, où le conduit de refoulement (30) comprend une paire d'orifices (360) opposés l'un à l'autre, de sorte que les deux extrémités (441) du connecteur (44) sont insérées de manière rotative dans la paire d'orifices (360).

9. Séchoir selon l'une des revendications 1 à 8, où le conduit de refoulement (30) comprend une saillie (35) formé dans une direction radiale vers l'extérieur, et le boîtier (10) présente une rainure (601) ménagée à l'intérieur, de sorte que la saillie (35) est apte à se déplacer le long de la rainure (601).

10. Séchoir selon la revendication 9, où la rainure (601) est formée dans un guidage cylindrique (60) disposé à l'intérieur du boîtier (10).

11. Séchoir selon la revendication 9 ou la revendication 10, où la rainure (601) forme une courbe fermée, de sorte que la saillie (35) tourne autour de la rainure (601) quand le conduit de refoulement (30) est tourné.

12. Séchoir selon la revendication 11, où la rainure (601) a une forme ondulée, et où la forme ondulée est préférentiellement une forme sinusoïdale.

13. Séchoir selon l'une des revendications 9 à 12, où la saillie (35) présente une paire de saillies (35a, 35b) espacées l'une de l'autre de 180 degrés dans le sens de rotation du conduit de refoulement (30).

14. Séchoir selon la revendication 13, si dépendante de la revendication 12, où la forme ondulée de la rainure (601) est symétrique dans les directions vers l'avant et vers l'arrière par rapport à une ligne de référence centrale de la rainure (601), ou la forme ondulée a un angle périodique de 180 degrés.

15. Séchoir selon la revendication 13, où une ligne droite virtuelle reliant la paire de saillies (35a, 35b) et la ligne axiale centrale du connecteur (44) sont orthogonales l'une à l'autre.
